# EUROPEAN PATENT SPECIFICATION

(11) **EP 0 405 818 B1**
(45) Date of publication and mention of the grant of the patent: **17.04.1996**
(21) Application number: 90306651.2
(22) Date of filing: 19.06.1990
(51) Int. Cl.: C08F 2/38, C08F 20/06

(54) **Low molecular weight, water-soluble phosphinate and phosphonate-containing polymers, and their preparation**
Wasserlösliche Phosphinat und Phosphonat enthaltende Polymere mit niedrigem Molekulargewicht und ihre Herstellung
Polymères solubles dans l'eau de faible poids moléculaire contenant des groupes phosphinate et phosphonate et leur préparation

(30) Priority: 26.06.1989 US 371467
(43) Date of publication of application: 02.01.1991
(73) Proprietor: ROHM AND HAAS COMPANY, Philadelphia Pennsylvania 19105 (US)
(72) Inventor: Hughes, Kathleen Anne, Blue Bell, Pennsylvania 19422 (US); Swift, Graham, Blue Bell, Pennsylvania 19422 (US)
(74) Representative: Tanner, James Percival

(56) References cited:
- EP-A- 0 150 706
- EP-A- 0 175 317
- EP-A- 0 175 317
- EP-A- 0 278 026
- EP-A- 0 360 746
- GB-A- 1 458 235

## Description

This invention is concerned with low molecular weight carboxylic acid polymers and their preparation.

Low molecular weight carboxylic acid polymers and their salts are useful as dispersants, scale inhibitors, detergent additives, and sequestrants. Generally a molecular weight below 50,000 is necessary for effective performance and often very low molecular weights below 10,000 are most effective. It is common to use chain transfer agents in the polymerization reaction to produce low, and especially the very low, molecular weight polymers. Hypophosphorus acid and its salts (commonly sodium hypophosphite) are particularly desirable chain transfer agents, chosen primarily because they introduce phosphinate and phosphonate functionality into water-soluble polymers which confers superior performance properties in some applications.

As used hereinafter, the term "hypophosphorus acid" is intended to include salts thereof, unless a clearly different meaning is indicated.

The use of hypophosphorus acid and its benefits have been taught in US-A-2,957,931, and GB-A-1458235 (family members are US-A-4,046,707, US-A-4,105,551, US-A-4,127,483, and US-A-4,159,946). In EP-A-0175317 (family member is US-A-4621127) hypophosphorous acid is also used to prepare low molecular weight polymers. Conventional chain regulators are used to control molecular weight: however, there is no disclosure or suggestion of cofeeding the reactants to control molecular weight.

Inefficiency is a problem that is common to all the prior uses of hypophosphorus acid as a chain transfer agent. Much of the agent does not specifically become part of the transfer process. A significant portion is not incorporated into the polymer and remains unreacted or is converted to other inorganic species such as phosphorus acid or its salts. As a consequence, high levels of hypophosphorus acid are required to obtain low molecular weight. Since hypophosphorus acid is a relatively expensive material, it becomes a costly route to low molecular weight polymers. In the case of preparing very low molecular weight polymers, the levels of hypophosphorus acid required may be prohibitively expensive.

A second disadvantage arising from the inefficiency is the significant amounts of unreacted hypophosphite or other inorganic residues present in the reaction product. These salts do not contribute to performance thereby diluting the activity of the reaction product. In some cases, such as preparing concentrated clay slurries, these salts can interfere with the dispersing process.

Another disadvantage of the prior usage of hypophosphorus acid resides in the mix of polymer species formed. The reaction products include dialkyl phosphinate polymers and monoalkyl phosphinate and phosphonate polymers. In the prior art processes, only about 50% by weight or less of the hypophosphorus acid is incorporated into the dialkyl species. Since the dialkyl species are believed to have greater biodegradability than the monoalkyls of equal molecular weight, the prior processes give products with relatively poor biodegradability.

The present invention enables the preparation of low molecular weight, water-soluble, carboxylic acid-based polymers containing phosphinate or phosphonate moieties incorporated into the polymer chain.

According to the present invention there is provided a process for forming low molecular weight, water-soluble polymers having a weight average molecular weight of less than 50,000, which comprises polymerizing, in a reactor, a heated, agitated, aqueous reaction mixture comprising water, polymerization initiator, a hypophosphorus acid or a salt thereof as chain transfer agent, alkaline neutralizer, one or more monoethylenically unsaturated monocarboxylic acid and, optionally, one or more comonomer selected from monoethylenically unsaturated dicarboxylic acids, anhydrides of monoethylenically unsaturated dicarboxylic acids, and carboxyl-free monomers, and wherein the alkaline neutralizer is present during a major portion of, or the whole of, the polymerization in an amount sufficient to neutralize at least 20% of the acid groups of the carboxylic acid monomer(s), characterised in that the hypophosphorus acid or salt thereof, the alkaline neutralizer and, optionally, the polymerization initiator and monomer(s) are cofed into the reactor.

The process of the present invention makes efficient use of the hypophosphorus acid as a chain transfer agent. Also significantly reduced levels of this expensive chain transfer agent are required to achieve low molecular weight. The improved efficiency is obtained by means of in-process neutralization of the carboxylic acid-containing monomer(s) during the polymerization reaction.

In one embodiment of the invention 20 to 100% equivalents of the alkaline neutralizer are co-fed to the reactor along with the hypophosphorus acid and, optionally, also along with the monoethylenically unsaturated monocarboxylic acid, water-soluble initiator, water and, when present, the monoethylenically unsaturated dicarboxylic acid and/or carboxyl-free monomer.

There is also provided an improved low molecular weight, water-soluble polymer mixture containing: 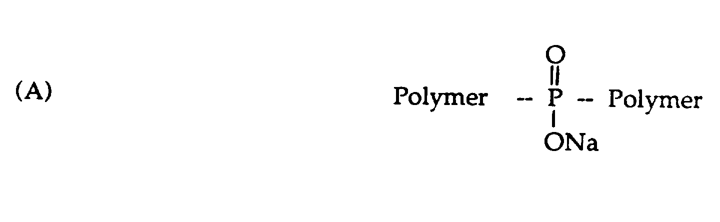 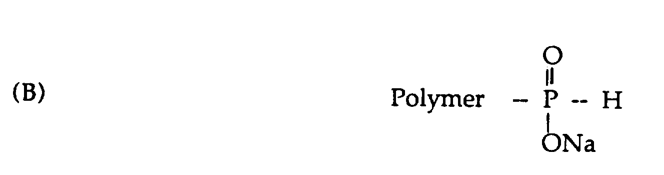 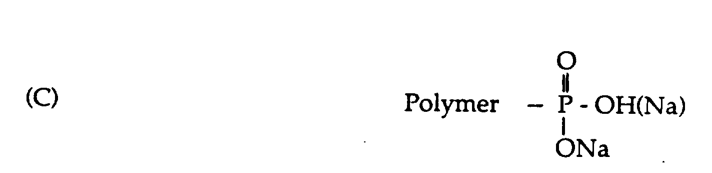 together with inorganic salts, wherein at least 80%, for example at least 90% of the phosphorus is contained in the polymeric materials with the remainder in the inorganic salts.

The low molecular weight, water-soluble carboxylate polymer composition, which has higher activity and improved biodegradability, can have high levels of dialkyl phosphinate polymers and low levels of unreacted or unincorporated hypophosphite or phosphite inorganic compounds where greater than 50% by weight of the phosphorus present is in the dialkyl species and less than 20% by weight is in inorganic phosphorus-containing acids or salts.

The term "monoalkyl", as used herein in connection with the phosphinate and phosphonate polymers, refers to the presence of one polymer chain with an alkyl portion thereof being bonded to the phosphorus of the phosphinate or phosphonate group. Similarly, the term "dialkyl", as used herein in connection with the phosphinate polymers, refers to the presence of two polymer chains with an alkyl portion of each polymer chain being bonded to the phosphorus atom of the phosphinate group.

It has surprisingly been found that, when using hypophosphorus acid as the chain transfer agent, neutralization of carboxylic acid monomer(s) during polymerization has a major effect on the chain transfer efficiency. Further, if 20 to 100 percent equivalents of the alkaline neutralizer are co-fed with the acid monomer(s), the hypophosphorus acid, water-soluble initiator and water to the reactor the percent of the hypophosphite that enters into the chain transfer process and becomes incorporated into the polymer, especially into dialkyl phosphinate polymer molecules, will be significantly increased.

Low molecular weight refers to a weight average molecular weight (M_{w}) of less than 50,000, preferably less than 20,000, and most preferably less than 10,000, for example less than 5,000.

The process of the invention is aqueous based and can be run in a batch, continuous, or semi-continuous mode.

In one embodiment of the present invention the monomers are principally monoethylenically unsaturated monocarboxylic and dicarboxylic.

Examples of monocarboxylic acids useful in this invention are acrylic acid, methacrylic acid, vinyl acetic acid (3-butenoic acid), and acryloxypropionic acid. Examples of suitable dicarboxylic acid monomers include maleic acid, itaconic acid, mesaconic acid, fumaric acid and citraconic acid. The anhydrides of the carboxylic acids, such as maleic anhydride, are also useful.

The carboxyl-free monomers may be present at levels where they are soluble in the reaction mixture and the produced polymer is soluble in water. In any case, the carboxyl-free monomer is less than 80%, and preferably less than 50%, by weight of the total weight percent of monomer charged. Examples of suitable monoethylenically unsaturated monomers, which are not carboxylic acids, are: alkyl esters of acrylic or methacrylic acid, such as methyl, ethyl or butyl acrylate or methyl, butyl or isobutyl methacrylate; hydroxyalkyl esters of acrylic or methacrylic acids, such as hydroxyethyl or hydroxypropyl acrylate or methacrylate; acrylamide; methacrylamide; phosphoethyl methacrylate; allyl or methallyl alcohols, esters and ethers; acrylonitrile; vinyl acetate; styrene; vinyl sulphonic acid or salts thereof; and 2-acrylamido-2-methyl propane sulphonic acid or salts thereof.

Preferably the monomer(s) consist of 21 to 100%, for example 51 to 100%, by weight of a mixture of monoethylenically unsaturated mono- and dicarboxylic acids, and 79 to 0%, for example 49 to 0%, by weight of carboxyl-free monomer.

The chain transfer agent, or chain regulator, used in the present invention is hypophosphorus acid or a salt thereof, such as sodium hypophosphite monohydrate. The level used will vary with the desired molecular weight. The molecular weight produced is inversely proportional to the level of chain transfer agent. Levels as little as 1 percent (weight percent based on monomer) to as much as 75 percent or more may be used.

Suitable water-soluble initiators include, but are not limited to: hydrogen peroxide; t-butyl hydroperoxide; sodium, potassium or ammonium persulphate; sodium, potassium or ammonium perphosphate; and 2,2 azobis (cyanovaleric acid). These are normally used in amounts of 0.05% to 5% by weight (based on weight of monomer(s)). A preferred range is 0.1 to 2% by weight (based on weight of monomer(s)).

Metal salt activators or promoters may also be added as part of the initiator system. Examples include water-soluble salts of cobalt, iron, copper, nickel, zinc, tungsten, cerium, molybdenum, titanium and zirconium. Preferred levels of metal salts are 0 to 100 ppm, based on weight of monomer(s).

The alkaline neutralizer may be any inorganic or organic base. Among the preferred bases which may be used are sodium hydroxide, potassium hydroxide, ammonium hydroxide, triethanolamine, dimethyl amino ethanol, ethanolamine and trimethyl hydroxyethyl ammonium hydroxide or mixtures thereof. The level of neutralizer sufficient to neutralize the acid groups of the carboxylic monomers is typically 20 to 100 percent equivalents, based on the acid or anhydride monomer content of the reaction mix, preferably 40 to 100 percent equivalents. A more preferred level of neutralizer is 50 to 95 percent equivalents.

The polymers produced are preferably poly(meth)acrylates. The term "poly(meth)acrylates" is intended to mean polymers where One or more of the monomers polymerized is an acrylic or methacrylic acid but some non-acrylate monomers may be included and even be present in a major amount.

Polymerizations are normally run at greater than 20% by weight solids (non-volatile solids in aqueous polymerized product) and preferably in the 30 to 80% by weight solids range. Polymerization temperatures from 60 to 150°C may be employed, with a preferred range being 75 to 100°C. A portion Of the Water is preferably charged initially to the reactor. Each of the reactants may then be co-fed; the monomer(s), chain transfer agent, initiator, and alkaline neutralizer being added separately and at a linear rate to the stirred water charge over a period of 0.5 to 10 hours. Linear feed rate refers to maintaining the same feed rate of reactant during the entire addition period. In a batch process, the polymerization is conducted until all ingredients have been added and complete polymerization has occurred as indicated by the solids content of the solution. If residual monomer levels are higher than desired, a longer hold period may be employed with optional addition of more initiator or other suitable monomer scavengers.

In a continuous or semi-continuous mode, continuous removal of a portion of the reaction mixture is started after a portion of the reactants have been added, for example, after approximately 30 minutes. The addition, e.g. co-feed, of starting ingredients is then continued at a rate equal to the discharge rate.

The initiator, chain transfer agent and alkaline neutralizer are normally added as aqueous solutions for simplicity and accuracy of metering and more uniform reaction. The reactants can be fed separately although some preblending may be practiced; blending of monomers or preneutralizing the acid monomer are examples of alternative modes for the present invention.

The purpose of employing hypophosphorus acid in the polymerization is two fold. One is to provide phosphinate and phosphonate functionality in the resulting polymer composition. It is well known that these groups can produce desirable performance for the polymer, for example, in dispersing or water treatment applications. The second contribution arises from its chain transfer activity and is a means to control molecular weight, and more specifically to provide low, particularly very low, molecular weight polymers. The reaction product formed is a mixture of species. NMR analysis indicates the composition generally consists of:
A - Polymeric 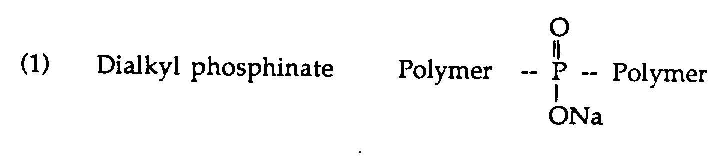 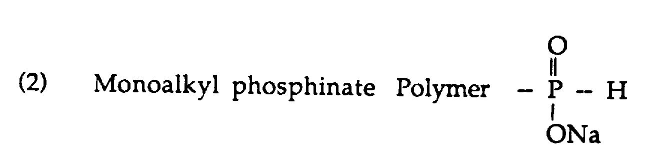 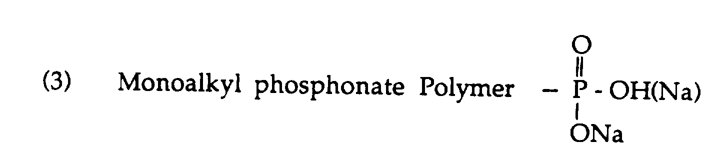
B - Inorganic 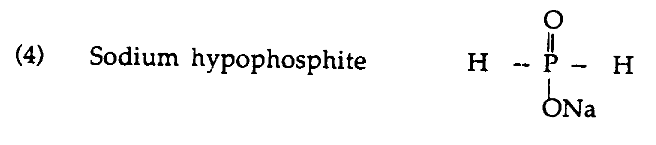 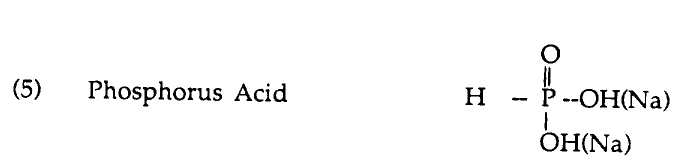 The ratio of the species present in the reaction product mixture is a function of the process employed. As illustrated by the Examples, the in-process neutralization process produces a mix that has less unincorporated inorganic compounds and more dialkyl polymer species than does the prior art processes not employing in-process neutralization. One means to describe the composition is on the basis of the percent of the total phosphorus that is in each of the species. Typical ratios for reaction product composition, obtained by the process of the present invention, versus the prior art process are:

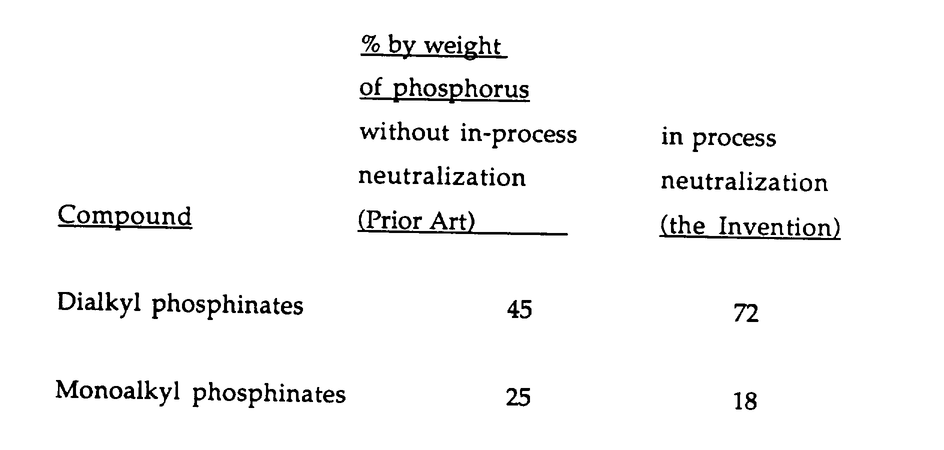

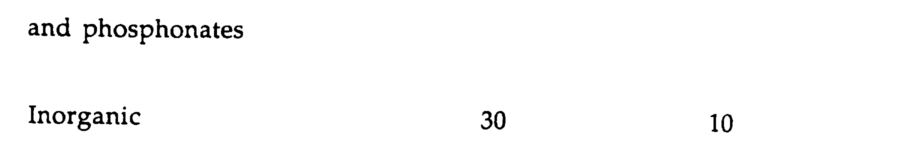

As will be illustrated in the Examples given hereinafter, most of the phosphorus is in a useful form, that is, is reacted with the dialkyl and monoalkyl polymers of the present invention. The polymer mixtures are therefore improved over those available heretofore by the prior art processes. Under the preferred conditions of the invention, depending upon the amount of acid groups neutralized in-process, the dialkyl phosphinates will usually contain 50 to 90% by weight of the total phosphorus. The monoalkyl phosphinates and phosphonates will usually contain between 10% and 40% by weight of the phosphorus, with the remainder, if any, in the inorganic salts.

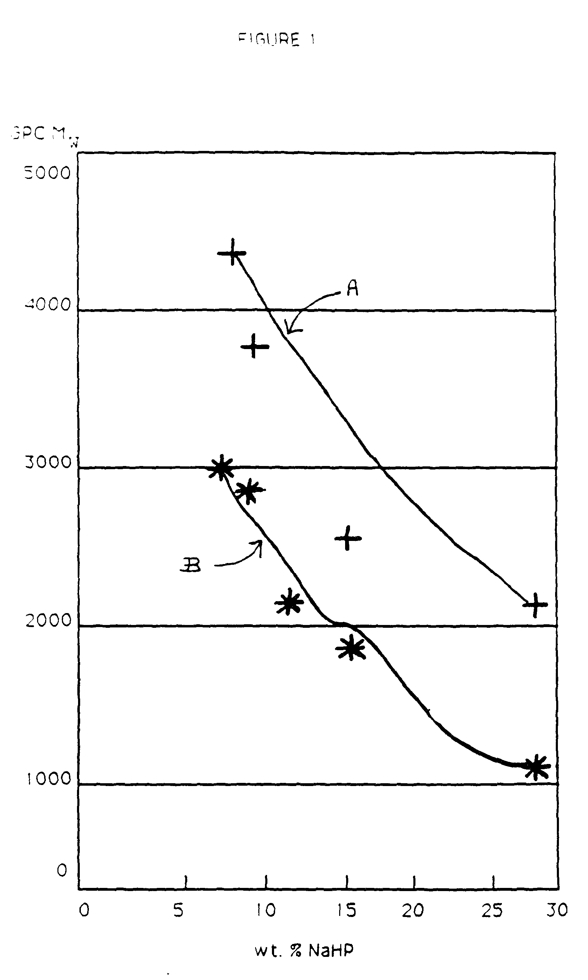

The relationship of level of chain transfer agent to molecular weight of the polymer produced is illustrated in Figure 1 of the accompanying drawings for two processes, namely, the process of the present invention and the prior art process without neutralization, both processes using sodium persulphate as initiator at 90°C. In prior art process without neutralization (line "A" in Figure 1, ambient pH, i.e. pH 2), the molecular weight will decrease with increasing level of sodium hypophospite ("NaHP"). It requires, for example, 30% by weight NaHP (based on monomer) to produce a polymer with a weight average molecular weight (M_{w}) of approximately 2,000. In the present invention (line "B" in Figure 1) employing in-process neutralization (95% equivalents for pH 6), 13% by weight NaHP, or less than one half as much, is required to produce a polymer with a M_{w} of 2,000.

M_{w} is determined by aqueous gel permeation chromatography (GPC).

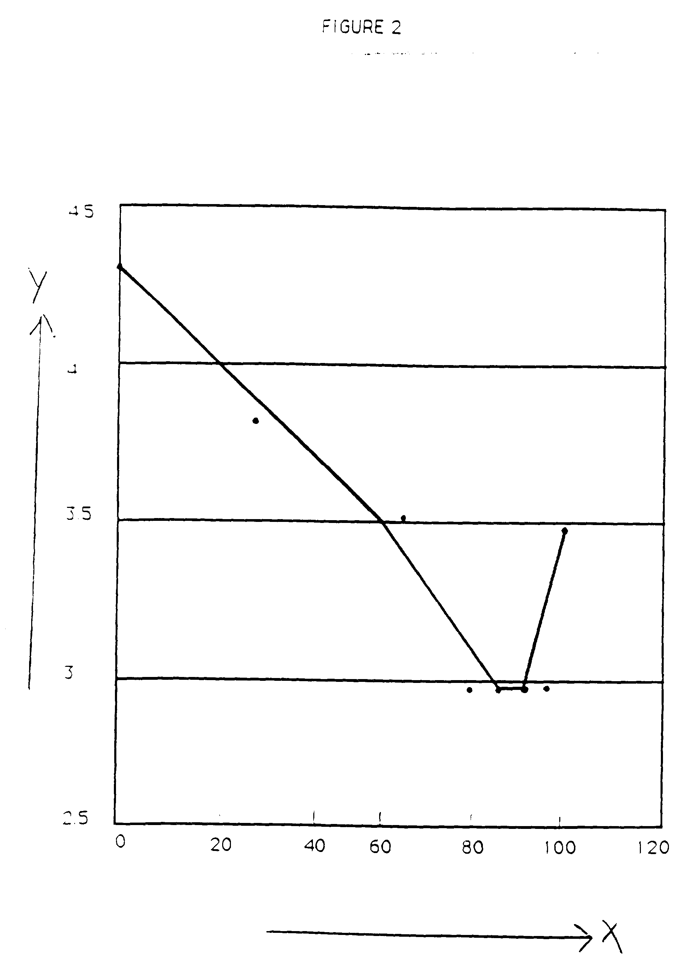

The effect of degree of in-process neutralization (percent equivalents of alkaline neutralizer based on acrylic acid monomer) is depicted in Figure 2 of the accompanying drawings. The graph of Figure 2 is for pAA with 7.4% sodium hypophosphite, with the "X" axis representing the % in-process neutralization and the "Y" axis representing the GPC M_{w} x 100. At a given level of NaHP, the extent to which M_{w} is lowered is directly related to the efficiency of utilization of the NaHP. Over the range of 20 to 100 percent equivalents of alkaline neutralizer, the M_{w} is significantly lower than the prior art process.

The compositions with the high dialkyl polymer and low inorganic compounds content are more useful in a number of end use applications including dispersants for paint formulations, additives for laundry and machine dishwashing detergents, dispersants for kaolin clay slurries and scale inhibitors, dispersants and corrosion inhibitors for water treatment and oil production.

The present invention will now be further illustrated by way of the following Examples. In the Examples, all percentages are percentages by weight.

### Example 1

To a two-liter, four-neck flask equipped with a mechanical stirrer, a condenser, a thermometer and inlets for the gradual addition of monomer, alkaline neutralizer, initiator and sodium hypophosphite solutions, was added 566 grams of deionized (DI) water. The water was heated to 90°C. A monomer charge of 500 grams of glacial acrylic acid was prepared. A neutralizer co-feed charge of 528 grams of 50% sodium hydroxide (95 equivalent percent based on the acid monomer) was prepared. A chain regulator co-feed solution was prepared by dissolving 36.8 grams of sodium hyphophosphite monohydrate in 40 grams of DI water. An initiator solution was prepared by dissolving 5 grams of sodium persulphate in 58 grams of DI water.

The acrylic acid, sodium hydroxide, sodium persulphate and sodium hypophosphite charges were added linearly and separately over three hours to the stirring water charge. Temperature was maintained at 90°+/-2°C.

The resultant polymer solution had a solids content of 41%, pH of 6.7, viscosity of 0.21 Pa s (210 centipoises) and residual monomer content of less than 0.01%. Molecular weight by GPC was M_{w} 2700.

NMR analysis showed the composition to be a mixture of dialkyl phosphinate polymer, monoalkyl phosphinate polymer, monoalkyl phosphonate polymer, sodium hypophosphite and sodium phosphite in water in which 72% of the phosphorus was incorporated in the dialkyl species, 18% in the monoalkyl species and 10% in the inorganic salts.

### Example 2

The procedure of Example 1 was repeated except that the amount of DI water added to the reactor was 393 grams and the co-feed alkaline neutralizer was 400 grams of ammonium hydroxide (28% ammonia).

The resultant polymer solution had a solids content of 43%, pH 6.5, viscosity of 0.09 Pa s (90 centipoises), residual monomer of less than 0.01%, and a molecular weight M_{w} = 2800.

### Example 3 (Comparative)

The procedure of Example 1 was repeated except that no co-feed neutralizer was added during the polymerization. When the polymerization was completed, however, 528 grams of 50% sodium hydroxide solution was added to neutralize the polymer solution.

The resultant polymer solution had a solids content of 42%, pH 6.5, residual monomer of less than 0.01%, and M_{w} = 4320.

NMR analysis showed the composition to be a mixture of the same species as in Example 1 but with a different ratio. Of the total phosphorus present, 45% was incorporated into dialkyl phosphinate polymer, 25% in monoalkyl phosphinate and phosphonate polymer, and 30% not incorporated in the polymer.

### Example 4

The procedure of Example 1 was repeated except that the sodium hypophosphite monohydrate charge was increased to 73.6 grams dissolved in 80 grams of DI water.

The resultant polymer solution had a solids content of 42%; the pH = 6.5. Residual AA was <0.01%. The polymer molecular weight based on GPC measurement was M_{w} = 1800. NMR analysis showed that 75% of the phosphorus was incorporated as dialkyl phosphinate polymer, 22% as monoalkyl phosphinate and phosphonate polymer and less than 3% in the inorganic salts.

### Example 5

The procedure of Example 3 with no co-feed neutralizer was repeated except that the sodium hypophosphite monohydrate charge was increased to 73.6 grams dissolved in 80 grams of DI water.

The resultant polymer solution had 41% solids, pH 6.5, residual monomer <0.01% and M_{w} = 2300.

NMR analysis showed that the percent of phosphorus in the product was about 40% in dialkyl phosphinate polymer, about 25% in monoalkyl phosphinate and phosphonate polymer and about 35% not incorporated in polymer.

### Example 6

To a two-liter, four-neck flask equipped with a mechanical stirrer, a condenser, a thermometer and inlets for gradual additions of monomers, alkaline neutralizer, initiator and sodium hypophosphite solutions was added 206 grams of DI water and 20 grams of a 0.15% solution of iron sulphate heptahydrate dissolved in DI water. This solution was heated to 90°C. A monomer solution of 325 grams of glacial acrylic acid, 175 grams of maleic anhydride and 200 grams of DI water was prepared. An alkaline neutralizer co-feed of 451.6 grams of 50% sodium solution (75% equivalent percent based on monomers) and 100 grams of DI water was prepared. A chain regulator co-feed solution was prepared by dissolving 27.6 grams of sodium hypophosphite monohydrate in 66 grams of DI water. An initiator solution was prepared by dissolving 5 grams of sodium persulphate in 80 grams of DI water.

The monomers, sodium hydroxide, sodium persulphate and sodium hypophosphite charges were added linearly and separately over three hours to the stirring water charge. Temperature was maintained at 90 +/- 2°C.

The resultant polymer solution had 42% solids, pH 5.5, viscosity of 0.141 Pa s (141 centipoises), residual acrylic acid was 0.12% and residual maleic acid was 1.03%. M_{w} - 2800.

### Example 7

The procedure of Example 6 was repeated except that 330 grams of DI water was added, the monomer feed was 596 grams of glacial methacrylic acid, the alkaline neutralizer co-feed was 278 grams of 50% NaOH (50 equivalent % based on monomer) in 289 grams of DI water and the chain regulator co-feed was 36.8 grams of sodium hypophosphite monohydrate in 80 grams of DI water.

The resultant polymer solution had 42% solids, pH 5.3, viscosity 440 Pa s (490,000 centipoises), residual monomer of 0.11% and M_{w} = 25,200.

### Example 8

The procedure of Example 1 was repeated except that 200 grams of DI water was initially added to the reactor. The monomer feed was 288 grams of glacial acrylic acid. The initiator solution was 4 grams of sodium persulphate and 50 grams of DI water. The chain regulator solution was 212 grams of sodium hypophosphite monohydrate and 212 grams of DI water. The alkaline neutralizer cofeed was 304 grams of 50% sodium hydroxide solution (95 equivalent % based on monomer).

The resultant polymer solution had 46% solids, pH 6.3, viscosity of 0.035 Pa s (35 centipoises), residual monomer of <0.01% and M_{w} = 729.

### Example 9

The procedure of Example 1 was repeated except that 18.5 grams of sodium hypophosphite monohydrate was used.

The resultant polymer composition had a molecular weight of M_{w} = 5670.

### Example 10

The procedure of Example 1 was repeated except that the monomer charge was 300 grams of glacial acrylic acid and 200 grams of 2-hydroxyethyl acrylate and the neutralizer co-feed charge was 317 grams of 50% sodium hydroxide (95 equivalent percent).

The resultant polymer solution had a solids content of 42%, pH of 6.8 and M_{w} = 2800.

### Example 11

The procedure of Example 1 was repeated except that the monomer charge was 100 grams of glacial acrylic acid, 200 grams of hydroxyethyl acrylate and 200 grams of acrylamide and the neutralizer co-feed charge was 106 grams of 50% sodium hydroxide (95 equivalent percent).

The resultant polymer had a M_{w} = 2800.

### Example 12

A three-residence time semi-continuous run is illustrated in this example.

To a two-liter, 4-necked flask fitted with a bottom outlet and top inlets for gradual addition of monomer, alkaline neutralizer, initiator and chain transfer agent was added 474 grams of DI water. This water charge was heated to 91 ± 1°C.

A monomer feed of 1939 grams of glacial acrylic acid was prepared. An initiator-activator co-feed mixture consisting of 19.4 grams of sodium persulphate and 0.03 grams of ferrous sulphate in 226 grams of DI water, was prepared. A chain regulator co-feed solution of 143 grams of sodium hypophosphite monohydrate in 194 grams of DI water was prepared. An alkaline neutralizer co-feed solution of 2055 grams of 50% sodium hydroxide was prepared.

The hypophosphite feed was started for five minutes, then one third of each of the feeds was added linearly and separately, over 90 minutes, while maintaining reaction temperature of 91± 1°C. After 90 minutes, an additional co-feed of DI water (948 grams) was started and added linearly over 180 minutes. Simultaneously with the start of the water co-feed, product removal was started at a rate that maintained a total reactor weight of about 2008 grams. The monomer, initiator, chain regulator and alkaline neutralizer additions were maintained as their original rates, and the remaining two thirds of these charges were co-fed over the same 180 minute period. Alter a total elapsed time of 270 minutes (not including the five minute chain regulator start up charge), all the feeds were finished and the product in the reactor was allowed to drain from the reactor. The product was held at 85°C to further reduce residual monomer.

The resultant polymer solution had 45% solids, pH 7.3, residual monomer of 0.0037% and a molecular weight, M_{w} = 2800.

## Claims

1. A process for forming low molecular weight, water-soluble polymers having a weight average molecular weight of less than 50,000, which comprises polymerizing, in a reactor, a heated, agitated, aqueous reaction mixture comprising water, polymerization initiator, a hypophosphorus acid or a salt thereof as chain transfer agent, alkaline neutralizer, one or more monoethylenically unsaturated monocarboxylic acid and, optionally, one or more comonomer selected from monoethylenically unsaturated dicarboxylic acids, anhydrides of monoethylenically unsaturated dicarboxylic acids, and carboxyl-free monomers, and wherein the alkaline neutralizer is present during a major portion of, or the whole of, the polymerization in an amount sufficient to neutralize at least 20% of the acid groups of the carboxylic acid monomer(s), characterised in that the hypophosphorus acid or salt thereof, the alkaline neutralizer and, optionally, the polymerization initiator and monomer(s) are cofed into the reactor.

2. A process as claimed in Claim 1, wherein the reaction mixture comprises a mixture of monomers which are fed to the reactor as a mixture or are cofed as two or more separate monomer streams.

3. A process as claimed in Claim 1, wherein the reaction mixture comprises a mixture of monomers and wherein one or more of said monomers is initially charged to the reactor with the remaining monomer(s) being subsequently introduced into the reactor.

4. A process as claimed in any preceding claim, wherein the monomer(s) consist of 21 to 100% by weight of a mixture of monoethylenically unsaturated mono- and dicarboxylic acids, and 79 to 0% by weight of carboxyl-free monomer.

5. A process as claimed in any preceding claim, wherein the monomer(s) consist of 51 to 100% by weight of a mixture of monoethylenically unsaturated mono- and dicarboxylic acids, and 49 to 0% by weight of carboxyl-free monomer.

6. A process as claimed in any preceding daim, wherein the low molecular weight, water-soluble polymer has a weight average molecular weight of less than 10,000.

7. A process as claimed in any preceding claim, wherein the low molecular weight, water-soluble polymer has a weight average molecular weight of less than 5,000.

8. A process as claimed in any preceding claim, wherein the monoethylenically unsaturated monocarboxylic acid monomer is acrylic acid.

9. A process as claimed in any preceding claim, wherein the monomer(s) comprise acrylic acid and maleic anhydride.

10. A process as claimed in any preceding claim, wherein the alkaline neutralizer is present in an amount sufficient to neutralize 40 to 100% of the acid groups of the carboxylic monomer(s).

11. A process as claimed in any preceding claim, wherein the alkaline neutralizer is selected from sodium hydroxide, potassium hydroxide, ammonium hydroxide, and mixtures thereof.

## Patentansprüche

1. Verfahren zur Bildung von wasserlöslichen Polymeren mit niederem Molekulargewicht, die ein Gewichtsdurchschnitts-Molekulargewicht von weniger als 50.000 aufweisen, wobei man in einem Reaktor ein erhitztes, gerührtes, wäßriges Reaktionsgemisch polymerisiert, das Wasser, Polymerisationsinitiator, eine hypophosphorige Säure oder ein Salz davon als Kettentransfermittel, alkalisches Neutralisiermittel, eine oder mehrere monoethylenisch ungesättigte Monocarbonsäure(n) und, gegebenenfalls, eines oder mehrere Comonomere, ausgewählt aus monoethylenisch ungesättigten Dicarbonsäuren, Anhydriden von monoethylenisch ungesättigten Dicarbonsäuren und carboxylfreien Monomeren enthält, und worin das alkalische Neutralisiermittel während eines Hauptteils oder der Gesamtheit der Polymerisation in einer Menge vorliegt, die ausreicht, um wenigstens 20 % der Säuregruppen des oder der Carbonsäuremonomeren zu neutralisieren, dadurch gekennzeichnet, daß die hypophosphorige Säure oder ihr Salz, das alkalische Neutralisiermittel und gegebenenfalls der Polymerisationsinitiator und Monomer(e) gemeinsam in den Reaktor eingespeist werden.

2. Verfahren nach Anspruch 1, dadurch gekennzeichnet, daß das Reaktionsgemisch ein Gemisch von Monomeren enthält, die in den Reaktor als ein Gemisch oder gemeinsam als zwei oder mehr separate Monomerströme eingespeist werden.

3. Verfahren nach Anspruch 1, dadurch gekennzeichnet, daß das Reaktionsgemisch ein Gemisch von Monomeren enthält, worin eines oder mehrere dieser Monomeren anfänglich in den Reaktor eingespeist wird(werden) und das oder die verbleibende(n) Monomere(n) dann in den Reaktor eingespeist werden.

4. Verfahren nach einem der vorhergehenden Ansprüche, dadurch gekennzeichnet, daß das oder die Monomere(n) aus 21 bis 100 Gew.-% eines Gemischs von monoethylenisch ungesättigten Mono- und Dicarbonsäuren und 79 bis 0 Gew.-% carboxylfreiem Monomeren bestehen.

5. Verfahren nach irgendeinem der vorhergehenden Ansprüche, dadurch gekennzeichnet, daß das oder die Monomere(n) aus 51 bis 100 Gew.-% eines Gemischs von monoethylenisch ungesättigten Mono- und Dicarbonsäuren und 49 bis 0 Gew.-% carboxylfreiem Monomeren bestehen.

6. Verfahren nach irgendeinem der vorhergehenden Ansprüche, dadurch gekennzeichnet, daß das wasserlösliche Polymere mit niederem Molekulargewicht ein Gewichtsdurchschnitts-Molekulargewicht von weniger als 10.000 hat.

7. Verfahren nach irgendeinem der vorhergehenden Ansprüche, dadurch gekennzeichnet, daß das wasserlösliche Polymere mit niederem Molekulargewicht ein Gewichtsdurchschnitts-Molekulargewicht von weniger als 5.000 hat.

8. Verfahren nach irgendeinem der vorhergehenden Ansprüche, dadurch gekennzeichnet, daß das monoethylenisch ungesättigte Monocarbonsäure-monomere Acrylsäure ist.

9. Verfahren nach irgendeinem der vorhergehenden Ansprüche, dadurch gekennzeichnet, daß das oder die Monomere(n) Acrylsäure und Maleinsäureanhydrid enthalten.

10. Verfahren nach irgendeinem der vorhergehenden Ansprüche, dadurch gekennzeichnet, daß das alkalische Neutralisiermittel in einer Menge vorhanden ist, die ausreicht, um 40 bis 100 % der Säuregruppen des oder der Carboxylmonomeren zu neutralisieren.

11. Verfahren nach irgendeinem der vorhergehenden Ansprüche, dadurch gekennzeichnet, daß das alkalische Neutralisiermittel ausgewählt ist aus Natriumhydroxid, Kaliumhydroxid, Ammoniumhydroxid und Gemischen davon.

## Revendications

1. Procédé de formation de polymères hydrosolubles, de faible masse moléculaire, possédant une masse moléculaire moyenne en poids inférieure à 50 000, qui consiste à polymériser, dans un réacteur, un mélange réactionnel aqueux, agité, chauffé, comprenant de l'eau, un initiateur de polymérisation, un acide hypophosphoreux ou un sel de celui-ci en tant qu'agent de transfert de chaîne, un neutralisant alcalin, un ou plusieurs acides monocarboxyliques à insaturation monoéthylénique et, éventuellement un ou plusieurs comonomères choisis parmi des acides dicarboxyliques à insaturation monoéthylénique, des anhydrides d'acides dicarboxyliques à insaturation monoéthylénique et des monomères non carboxylés, et dans lequel le neutralisant alcalin est présent durant la majeure partie, ou durant toute la polymérisation, en une quantité suffisante pour neutraliser au moins 20% des groupes acides du ou des monomères acides carboxyliques, caractérisé en ce que l'acide hypophosphoreux, ou un sel de celui-ci, le neutralisant alcalin et, éventuellement, l'initiateur de polymérisation et le ou les monomères sont coalimentés dans le réacteur.

2. Procédé selon la revendication 1, dans lequel le mélange réactionnel comprend un mélange de monomères qui sont alimentés dans le réacteur sous forme d'un mélange ou qui sont coalimentés sous forme de deux ou de plusieurs courants séparés de monomères.

3. Procédé selon la revendication 1, dans lequel le mélange réactionnel comprend un mélange de monomères, un ou plusieurs desdits monomères étant initialement chargés dans le réacteur, et le ou les monomères restants étant introduits par la suite dans le réacteur.

4. Procédé selon l'une des revendications précédentes, dans lequel le ou les monomères sont constitués de 21 à 100% en poids d'un mélange d'acides mono- et dicarboxyliques à insaturation monoéthylénique, et de 79 à 0% en poids de monomère non carboxylé.

5. Procédé selon l'une quelconque des revendications précédentes, dans lequel le ou les monomères sont constitués de 51 à 100% en poids d'un mélange d'acides mono- et dicarboxyliques à insaturation monoéthylénique, et de 49 à 0% en poids de monomère non carboxylé.

6. Procédé selon l'une quelconque des revendications précédentes, dans lequel le polymère hydrosoluble, de faible masse moléculaire, possède une masse moléculaire moyenne en poids inférieures 10 000.

7. Procédé selon l'une quelconque des revendications précédentes, dans lequel le polymère hydrosoluble, de faible masse moléculaire, possède une masse moléculaire moyenne en poids inférieure à 5 000.

8. Procédé selon l'une quelconque des revendications précédentes, dans lequel le monomère acide monocarboxylique à insaturation monoéthylénique est l'acide acrylique.

9. Procédé selon l'une quelconque des revendications précédentes, dans lequel le ou les monomères comprennent l'acide acrylique et l'anhydride maléique.

10. Procédé selon l'une quelconque des revendications précédentes, dans lequel le neutralisant alcalin est présent en une quantité suffisante pour neutraliser 40 à 100% des groupes acides du ou des monomères carboxyliques.

11. Procédé selon l'une quelconque des revendications précédentes, dans lequel le neutralisant alcalin est choisi parmi l'hydroxyde de sodium, l'hydroxyde de potassium, l'hydroxyde d'ammonium, et leurs mélanges.
